# FASCICULE DE BREVET EUROPEEN

(11) **EP 1 772 312 B1**
(45) Date de publication et mention de la délivrance du brevet: **06.02.2008**
(21) Numéro de dépôt: 05360040.9
(22) Date de dépôt: 10.10.2005
(51) Int. Cl.: B60Q 1/42

(54) **Dispositif indicateur de changement de direction pour véhicule automobile**
Fahrtrichtungsanzeiger für Kraftfahrzeuge
Turn indicator for motor vehicle

(43) Date de publication de la demande: 11.04.2007
(73) Titulaire: Delphi Technologies, Inc., Troy, Michigan 48007 (US)
(72) Inventeur: Cordier, Emmanuel, 67190 Grendelbruch (FR); Simon, Claude, 67115 Plobsheim (FR)
(74) Mandataire: Merckling, Norbert

(56) Documents cités:
- EP-A- 0 867 337
- EP-A- 0 945 304
- EP-A- 0 972 678
- PATENT ABSTRACTS OF JAPAN vol. 2003, no. 12, 5 décembre 2003 (2003-12-05) -& JP 2005 170128 A (TOKAI RIKA CO LTD), 30 juin 2005 (2005-06-30)

## Description

La présente invention se rapporte au domaine technique général des dispositifs indicateurs de changement de direction de véhicules. Ces dispositifs de type lumineux et/ou sonores permettent d'avertir les autres usagers de la route de l'imminence d'une manoeuvre ou d'un changement de direction d'un véhicule.

Pour des raisons de confort d'utilisation, ces dispositifs sont pourvus d'un mécanisme de déverrouillage ramenant le levier d'actionnement des dispositifs dans leur position de repos après leur actionnement par simple rotation de la colonne de direction en sens inverse au sens d'actionnement initial du levier. Il peut cependant arriver que l'utilisateur maintienne le levier d'actionnement dans l'une de ses positions d'actionnement, avec l'un des indicateurs par exemple de type clignotant gauche ou droit par conséquent actif, tout en tournant en sens inverse la colonne de direction. Il est alors indispensable de prévoir dans le dispositif des moyens de sécurité empêchant une détérioration ou une déformation du mécanisme de déverrouillage ou des pièces coopérant avec ce dernier.

Il est connu de réaliser un dispositif indicateur de changement de direction pour véhicule comportant :
- un support fixe, monté au voisinage d'une colonne de direction,
- un levier d'actionnement en liaison mécanique avec le support et déplaçable entre des positions centrale et latérales gauche et droite stables, les positions latérales étant des positions dans lesquelles un indicateur est activé, la position centrale étant une position dans laquelle aucun indicateur n'est activé,
- un doigt mobile en liaison mécanique avec le levier d'actionnement et dont les positions sur le support sont déterminées par les positions du levier d'actionnement, l'extrémité libre du doigt mobile pouvant coopérer avec un organe d'entraînement tournant avec la colonne de direction lorsque le levier d'actionnement est dans sa position gauche ou droite de manière à le ramener dans sa position centrale en cas de rotation de l'organe d'entraînement en sens inverse au déplacement précédent du levier d'actionnement,
- et des moyens de sécurité garantissant l'intégrité du dispositif en cas de maintien forcé du levier d'actionnement dans une position gauche ou droite lors d'une rotation en sens inverse de l'organe d'entraînement.

A titre d'exemple, on connaît des dispositifs indicateurs de changement de direction incorporant un mécanisme de sécurité pour garantir l'intégrité de ses éléments constitutifs en cas de maintien forcé du levier d'actionnement dans une position latérale. Ce mécanisme n'est cependant pas dépourvu d'inconvénients. Il comporte en effet un grand nombre de pièces constitutives en mouvement relatif les unes par rapport aux autres et dont chacune permet d'obtenir et de réaliser une fonction bien précise, et dont le positionnement relatif doit être très précis pour assurer la fiabilité du dispositif indicateur de changement de direction.

La fabrication de ces nombreuses pièces ainsi que leur assemblage au voisinage d'une colonne de direction nécessite un temps considérable, l'ensemble obtenu conférant au surplus un encombrement relativement important au dispositif indicateur. Ceci peut s'avérer gênant dans de nombreux cas, dans la mesure où il n'y a souvent que très peu d'espace disponible au voisinage des colonnes de direction. La complexité de la solution technique évoquée présente également l'inconvénient de nuire à la fiabilité de ces dispositifs indicateurs de changement de direction. Or, pour des raisons de sécurité évidentes, ceux-ci ne doivent pas être l'objet de dysfonctionnements au cours de l'utilisation du véhicule.

Un dispositif selon le préambule de la revendication 1 est connu du document EP-A-0972678.

L'utilisation d'un grand nombre de pièces pour la constitution de ces dispositifs contribue enfin à augmenter sensiblement leur prix de revient, ce qui les rend économiquement peu attractifs.

Le but de la présente invention vise à remédier aux inconvénients précités et en particulier à améliorer leur fiabilité.

Un autre but de l'invention vise à réduire le nombre de pièces utilisées ainsi qu'à simplifier leur assemblage. Ces mesures, permettant de baisser les coûts à la fabrication et à l'assemblage, ont une incidence très favorable sur un plan économique.

Selon un autre objectif, l'invention vise enfin à réduire l'encombrement de tels dispositifs indicateurs, ce qui permet de simplifier la gestion de l'espace en haut des colonnes de direction, espace de plus en plus encombré par la multiplication des fonctions mises en oeuvre dans les voitures actuelles.

Pour satisfaire à ces objectifs, selon l'invention :
- le doigt mobile est monté pivotant sur le support fixe, le pivotement n'étant possible que dans la position d'embrayage pour dégager son extrémité libre de l'organe d'entraînement en fin de pivotement ;
- le doigt mobile et le support fixe comportent chacun une surface d'indexage, les deux surfaces étant superposées de manière à coopérer avec un poussoir d'extrémité du levier d'actionnement ;
- les surfaces d'indexage mobile et fixe comportent respectivement des cavités et des creux visant d'une part à assurer le positionnement stable du levier dans les positions centrale et latérales, ces dernières conduisant à faire coulisser le doigt mobile dans sa position d'embrayage, et d'autre part à assurer le retour du levier en position centrale à partir d'une position latérale par rotation du doigt et donc de la surface d'indexage mobile lors de la rotation de la colonne de direction en sens inverse de celle du levier ; et
- le poussoir est élastiquement escamotable pour permettre le maintien forcé du levier en position latérale, malgré le changement de rotation de la colonne de direction.

On obtient ainsi une solution technique considérablement plus compacte et facile à assembler au voisinage des hauts de colonnes de direction. La simplicité des formes et la qualité résultante des interactions mutuelles des pièces constitutives du dispositif conforme à l'invention contribuent grandement à améliorer sa fiabilité et sa durée de vie.

Le poussoir élastique, qui effectue en fait la liaison entre le levier et le doigt mobile, présente une course suffisante pour absorber un déplacement de cames d'appui disposées aux deux extrémités de la surface d'indexage mobile et venant appuyer sur le poussoir lors d'un déplacement de ladite surface d'indexage mobile visant à ramener le levier en position centrale alors que ce dernier est bloqué en position latérale.

De préférence, ledit poussoir élastique est guidé dans le levier selon un coulissement axial.

Selon un exemple de réalisation, le poussoir élastique est un organe d'appui rigide relié à un ressort intégré dans le levier d'actionnement. Le poussoir élastique, se déplaçant sur la surface d'indexage fixe, permet également de générer un retour d'information sensoriel à l'utilisateur manipulant le levier d'actionnement.

Le doigt mobile, qui réalise la liaison mécanique entre le levier et la colonne de direction, est guidé en translation et en pivotement par le support fixe. Il n'y a par conséquent qu'une seule pièce en mouvement par rapport au support fixe, en dehors du levier d'actionnement.

Il présente à cet effet deux plots dépassant orthogonalement du plan de déplacement du doigt mobile et engagés dans une rainure ménagée dans le support fixe, une première portion de la rainure servant à la translation du doigt par coulissement simultané des deux plots et une seconde portion de la rainure, sensiblement orthogonale à la première portion et communiquant avec elle, servant au coulissement de l'un seulement des plots à l'issue de la translation des deux plots dans la première portion, générant ainsi le pivotement du doigt mobile. Le guidage du doigt mobile se fait donc de manière remarquablement simple, puisque la rainure et les deux plots peuvent à eux seuls mettre en oeuvre séquentiellement le coulissement et la rotation.

Selon un exemple de réalisation, la rainure est conformée de façon traversante dans le support fixe. Pour le double guidage qu'elle effectue, la rainure présente de préférence une forme sensiblement en T. Cette configuration est simple et facile à réaliser.

L'un des aspects innovants, car simplificateur, de l'invention consiste en la double surface d'indexage et la possibilité de coopération entre les deux surfaces.

Pour remplir leurs fonctions respectives, la surface d'indexage fixe et la surface d'indexage mobile sont localisées sur un chant respectivement du support et du doigt mobile, orienté orthogonalement au plan de leurs déplacements relatifs. Ces chants sont superposés de manière à coopérer simultanément ou individuellement avec le poussoir élastique, selon le positionnement du doigt mobile et du levier d'actionnement par rapport au support fixe.

Plus précisément, la surface d'indexage fixe se compose par exemple de trois creux juxtaposés de même profondeur, pouvant loger le poussoir élastique, et la surface d'indexage mobile comporte trois cavités, encadrées par les cames d'appui, dont la cavité centrale est plus profonde que les cavités latérales et se superpose strictement au creux central de la surface d'indexage fixe au repos du doigt mobile, positionnant les cavités latérales en saillie du support.

Lorsque le levier prend l'une des positions latérales, il repousse lesdites cavités latérales de telle sorte que leur fond soit superposé à celui des creux latéraux de la surface d'indexage fixe, conduisant à déplacer en translation le doigt mobile par coulissement des plots dans la première portion de la rainure.

Il est bien entendu indispensable qu'au retour en position centrale du levier ou en l'absence d'interaction avec la colonne de direction, l'ensemble du système revienne à une position stable de repos, d'où l'existence des moyens de rappel. Selon l'invention, les moyens de rappel sont un ressort comprenant une portion centrale logée dans une gorge et en appui sur un épaulement du doigt mobile, et deux portions latérales élastiques fixées au support dans une position en deçà de sa liaison avec le doigt mobile, de manière à conférer une configuration incurvée au ressort.

Un tel organe assure à la fois le rappel en translation et en rotation, puisqu'il est capable d'exercer des forces de rappel décomposables en une composante parallèle à la direction de la translation du doigt mobile et une composante qui lui est perpendiculaire, notamment du fait de sa configuration en arc de cercle.

Selon une configuration possible, le levier d'actionnement est monté pivotant sur une platine solidaire du support fixe. On améliore ainsi la compacité du dispositif conforme à l'invention.

D'autres caractéristiques et avantages ressortiront également de la description détaillée figurant ci-après, en référence aux dessins annexés à titre d'exemples non limitatifs dans lesquels :
- la figure 1 est une représentation en vue de dessus d'un exemple de réalisation d'un dispositif indicateur conforme à l'invention ;
- la figure 2 est une représentation en vue de dessous du dispositif indicateur de la figure 1 ;
- la figure 3 est une représentation en vue de dessus d'un dispositif indicateur conforme à l'invention lorsque le levier est actionné latéralement ;
- la figure 4 est une représentation en vue de dessous du même dispositif indicateur dans un autre état de fonctionnement, levier ramené en position centrale par le doigt mobile suite à un changement de sens de rotation de la colonne de direction ;
- la figure 5 représente en vue de dessous le comportement du dispositif indicateur en l'absence de changement de direction du haut de colonne, le levier restant dès lors en position latérale ;
- la figure 6 est une représentation en vue de dessous montrant le levier en position latérale contrainte alors que le doigt mobile est actionné suite à un changement de sens de rotation de la colonne de direction ;
- les figures 7 et 8 montrent, respectivement de face et de dessus, un exemple de réalisation d'un dispositif indicateur avec la totalité du levier d'actionnement ;
- la figure 9 représente un exemple de réalisation d'un levier d'actionnement ;
- les figures 10 et 11 montrent, en vue de dessus et en perspective, le support du dispositif indicateur de l'invention ; et
- les figures 12 à 16 représentent différentes vues du doigt mobile.

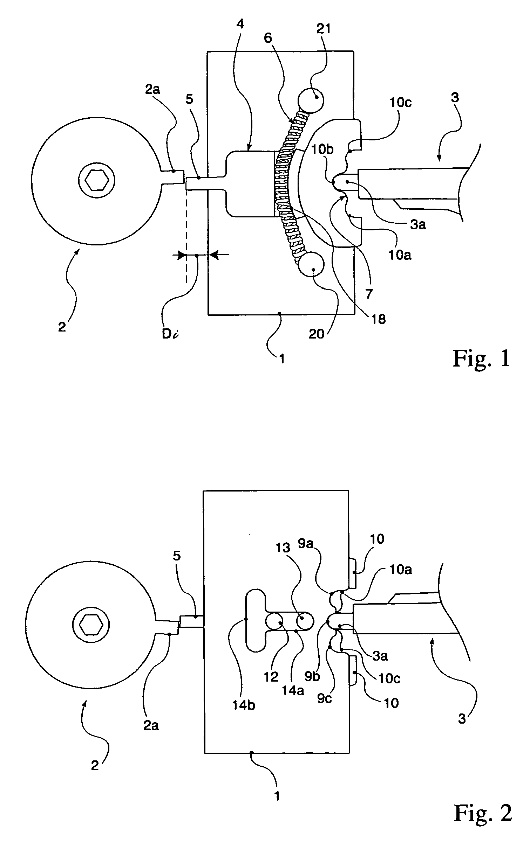

Le dispositif indicateur de changement de direction pour véhicule représenté schématiquement par exemple aux figures 1 et 2 comporte un support fixe (1) monté au voisinage d'une colonne de direction (2). Le dispositif comporte également un levier d'actionnement (3) en liaison mécanique avec le support fixe (1) et déplaçable entre des positions respectivement centrale, gauche et droite stables. Ces positions correspondent à un déplacement par exemple par pivotement du levier d'actionnement (3) entre une position centrale pour laquelle aucun indicateur de changement de direction n'est activé et des positions actives gauche et droite latérales, pour lesquelles un indicateur correspondant est activé, par exemple pour indiquer un changement de direction.

Le dispositif conforme à l'invention comporte également un doigt mobile (4) appelé également arbalète, en liaison mécanique avec le levier d'actionnement (3). Une extrémité libre (5) du doigt mobile (4) coopère avec un organe d'entraînement (2a) tournant avec la colonne de direction (2). Ainsi, l'organe d'entraînement (2a) a pour fonction de ramener le levier d'actionnement (3) dans sa position centrale à partir d'une position gauche ou droite en cas de rotation dudit organe d'entraînement (2a) en sens inverse au déplacement précédent du levier d'actionnement (3).

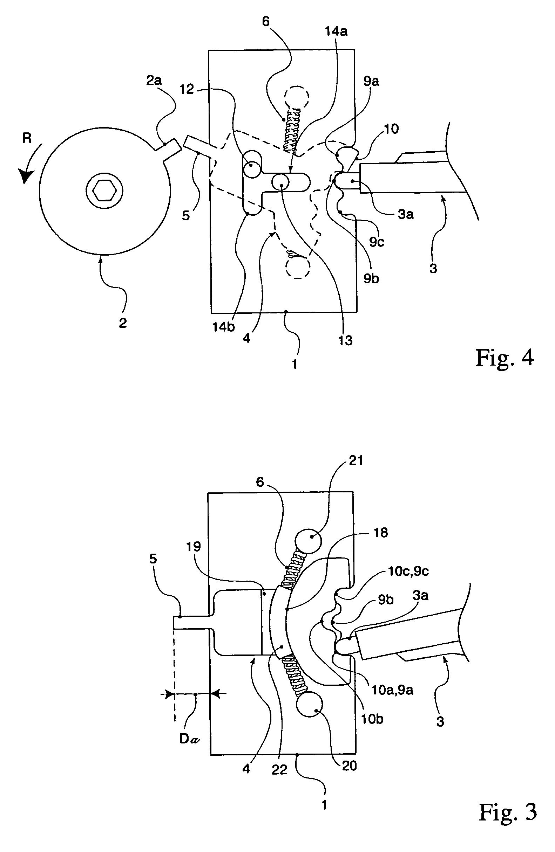

En positionnant le levier d'actionnement (3) par exemple dans une position gauche schématisée à la figure 3, le doigt mobile (4) se déplace par translation de manière à ce que l'extrémité libre (5) présente un écartement (Dₐ) par rapport au support fixe (1). L'écartement (Dₐ) est par exemple supérieur de 3 mm à un écartement (Dᵢ) par rapport au support fixe (1) correspondant à un positionnement central du levier d'actionnement (3), schématisé par exemple aux figures 1 et 2. Dans cette hypothèse, la colonne de direction (2) et l'organe d'entraînement (2a) peuvent tourner librement sans buter sur l'extrémité libre (5) du doigt mobile (4).

Le dispositif de l'invention comporte également des moyens de sécurité garantissant l'intégrité du dispositif en cas de maintien forcé du levier d'actionnement (3) dans une position gauche ou droite, lors d'une rotation en sens inverse de l'organe d'entraînement (2a), afin d'éviter sa détérioration ou celle de ses éléments constitutifs.

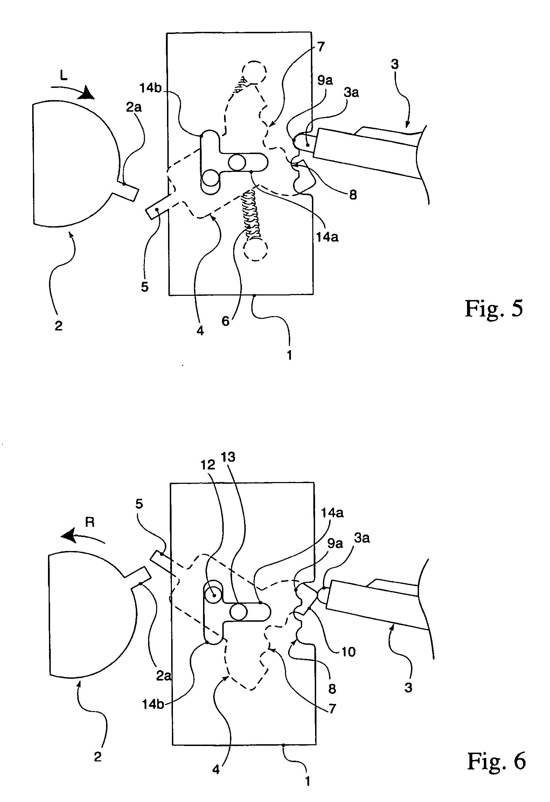

En se reportant à la figure 4, le doigt mobile (4) ramène le levier d'actionnement (3) dans sa position centrale lors d'une rotation dans le sens R de la colonne de direction (2) qui correspond au sens inverse de celui qu'implique en principe la position latérale du levier (3). La figure 5 montre l'absence d'interaction entre le doigt mobile (4) et le levier d'actionnement (3) lorsque la colonne de direction (2) tourne dans le sens qui correspond à la position latérale du levier (3). L'organe d'entraînement (2a), en tournant dans le sens indiqué L, bute contre l'extrémité libre (5) et fait pivoter le doigt mobile (4) sans affecter la position du levier (3).

La figure 6 montre le déplacement du doigt mobile (4) lors d'un maintien forcé du levier d'actionnement (3), lorsque la colonne (2) tourne en sens inverse R. L'interaction particulière du levier (3) et du doigt (4) dans cette hypothèse apparaît clairement (voir ci-après les explications plus détaillées).

Le doigt mobile (4) est monté coulissant et pivotant sur le support fixe (1). Un organe élastique (6) permet de le ramener dans sa position embrayable (voir figure 3) au retour d'une rotation gauche ou droite consécutivement à une rotation de la colonne de direction (2) en sens inverse de la rotation correspondant à la position latérale du levier (3). Le retour du levier (3) en position centrale déclenche de plus le rappel du doigt mobile (4) vers sa position initiale débrayée.

Le doigt mobile (4) comporte une surface d'indexage (7) sur laquelle se déplace un poussoir élastique (3a) du levier d'actionnement (3). La surface d'indexage (7), mobile avec le doigt (4), est associée à une surface d'indexage fixe (8) du support fixe (1) sur laquelle se déplace également le poussoir élastique (3a). Ce dernier est monté sur le levier d'actionnement (3) et peut donc se déplacer simultanément sur les deux surfaces d'indexage (7) et (8) en fonction des déplacements et des positions du doigt mobile (4) et du levier d'actionnement (3).

La surface d'indexage fixe (8) présente un creux gauche (9a), un creux central (9b) et un creux droit (9c) permettant de définir des positions discrètes et stables correspondant respectivement aux positions gauche, centrale et droite du levier d'actionnement (3). La surface d'indexage (7) mobile présente une cavité gauche (10a), une cavité centrale (10b) et une cavité droite (10c) dans lesquelles vient également se loger le poussoir élastique (3a), définissant ainsi un positionnement stable du doigt mobile (4) par rapport au levier d'actionnement (3) d'une part et par rapport au support fixe (1) d'autre part (voir en figure 3).

A titre d'exemple, la figure 5 montre le positionnement du poussoir élastique (3a) dans le creux gauche (9a) alors que la figure 4 montre le poussoir élastique (3a) ramené dans sa position centrale, correspondant au creux central (9b), par l'intermédiaire d'une came d'appui (10) localisée, sur le doigt (4), à chaque extrémité de la surface d'indexage (7) mobile. Le bord intérieur de chaque came d'appui (10) constitue plus précisément l'extérieur respectivement de la cavité gauche (10a) et de la cavité droite (10c). Ce sont également les cames d'appui (10) qui ramènent le levier d'actionnement dans sa position centrale.

Le poussoir élastique (3a) est prévu pour absorber un déplacement provoqué par l'action des cames d'appui (10) lorsque l'extrémité libre (5) est entraînée par l'organe d'entraînement (2a) lors d'un changement de sens de rotation de la colonne (2) et que le levier (3) est maintenu de force latéralement. Lesdites cames d'appui (10) et le poussoir élastique (3a) constituent de fait les moyens de sécurité en cas de maintien forcé du levier d'actionnement (3) dans une position gauche ou droite tel que cela est par exemple représenté à la figure 6.

Le doigt mobile (4) est guidé en translation et en pivotement par le support fixe (1). Le montage du doigt mobile (4) sur le support fixe (1) se fait de façon extrêmement simple dans la mesure où aucune pièce intermédiaire n'est nécessaire. Le doigt mobile (4) présente à cet effet deux plots (12, 13) s'étendant orthogonalement à son plan de déplacement. Ces deux plots (12, 13) sont engagés dans une rainure (14) ménagée dans le support fixe (1).

Une première portion (14a) de la rainure (14) sert au déplacement simultané en translation des deux plots (12, 13). Une seconde portion (14b) de la rainure (14), sensiblement orthogonale à la première portion (14a) et communiquant avec elle, sert au déplacement en translation de l'un seulement des plots (12) à l'issue d'un déplacement simultané en translation des deux plots (12, 13), conférant au doigt mobile (4) un mouvement de pivotement autour du plot (13). La rainure (14) constitue ainsi un moyen de guidage simple pour le doigt mobile (4).

Selon un exemple de réalisation, la rainure (14) est conformée de façon traversante dans le support fixe (1), et elle présente par exemple une forme en T.

La surface d'indexage fixe (8) et la surface d'indexage (7) mobile sont positionnées orthogonalement au support (1), leurs surfaces fonctionnelles constituant deux chants superposés respectivement du support (1) et du doigt mobile (4), leur superposition leur permettant de coopérer simultanément ou individuellement avec le poussoir élastique (3a). Cette coopération se fait selon le positionnement du doigt mobile (4) et du levier d'actionnement (3) par rapport au support fixe (1).

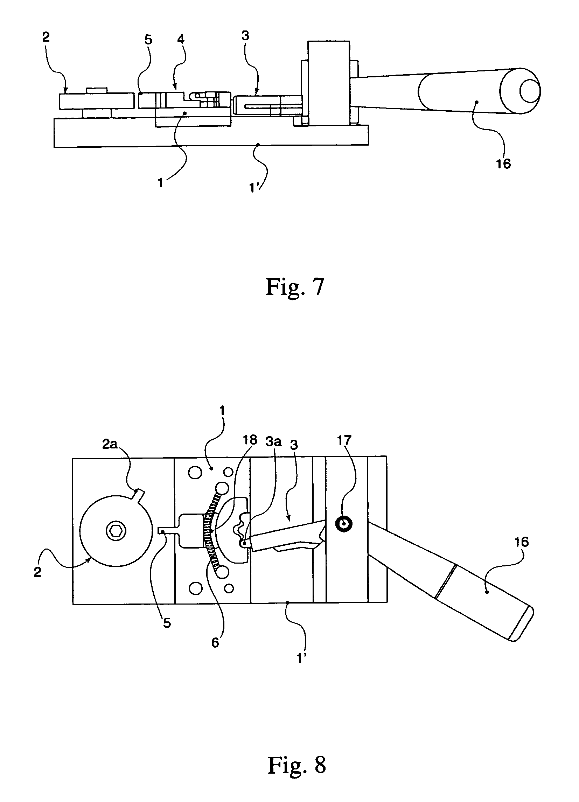

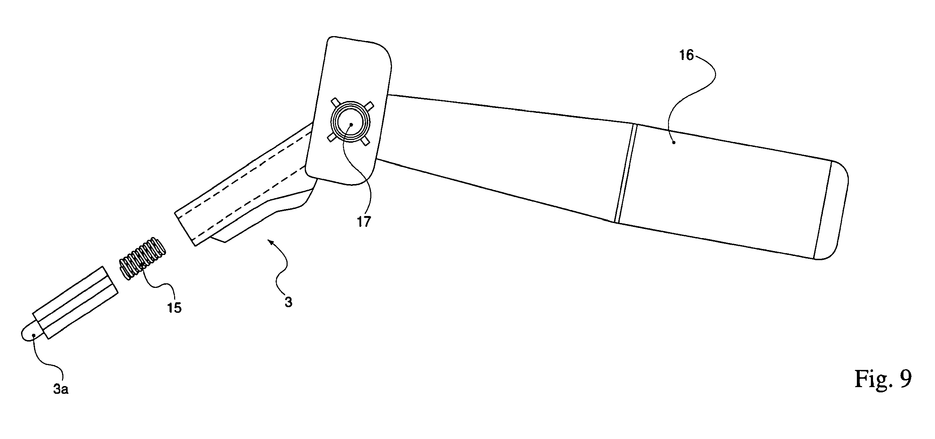

Le poussoir élastique (3a) est par exemple constitué d'un organe d'appui rigide sollicité par un ressort (15) intégré dans le levier d'actionnement (3). La figure 9 montre en éclaté un exemple de réalisation de levier d'actionnement (3) doté d'un manche de manipulation (16). Ce dernier est relié au levier d'actionnement (3) via une articulation (17), destinée à un montage pivotant du levier (3) sur le support fixe (1) ou sur une platine (1') solidaire de celui-ci. Ce montage apparaît par exemple aux figures 7 et 8.

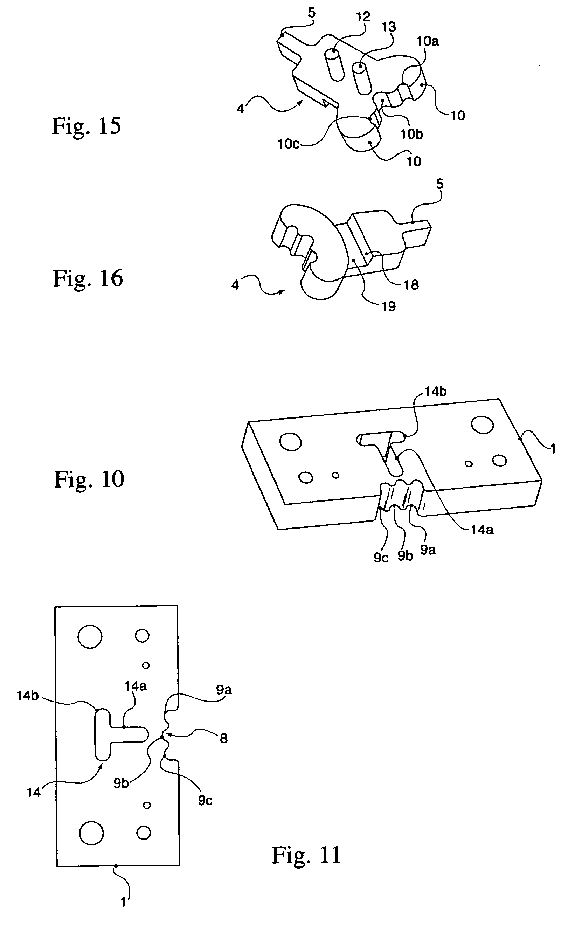

Les moyens de rappel (6) sont par exemple un ressort prenant appui sur un épaulement (18) d'une gorge (19) du doigt mobile (4), comme par exemple montré aux figures 1, 3 ou 16. Le ressort (6) est fixé sur le support fixe (1) à des points d'ancrage (20, 21) situés de part et d'autre du doigt mobile (4) et en deçà de sa liaison avec le doigt mobile (4), pour lui conférer, en coopération avec l'épaulement (18), une forme en arc de cercle lui permettant d'être actif selon deux directions perpendiculaires, correspondant aux deux portions de la rainure (14). Le ressort (6) présente par exemple des spires plus resserrées dans sa portion centrale (voir figure 1). Alternativement, il peut par exemple être recouvert d'une gaine protectrice (22) dans la zone de contact avec l'épaulement (18). Ce dernier est avantageusement incurvé pour améliorer sa coopération avec le ressort (6). Le positionnement précontraint en arc de cercle du ressort permet ainsi de conférer des composantes latérales à la force de rappel, favorisant le retour du plot (12) dans la première portion (14a) de la rainure (14).

A titre de variante, on peut envisager d'utiliser un moyen de rappel élastique (6) dont la force de rappel s'exerce essentiellement selon la direction d'extension de la première portion (14a) de la rainure (14), en optimisant la forme de la rainure (14) au niveau de la totalité du trajet du plot (12) de la première (14a) et la seconde portions (14b). Une telle configuration courbe ou arrondie favorise alors le glissement du plot (12) de la seconde portion (14b) vers la première portion (14a).

Les figures 7 et 8 représentent schématiquement une colonne de direction (2) montée sur la platine (1'). Il est évident que, sans sortir du cadre de la présente invention, cette réalisation peut être remplacée par une solution technique dans laquelle la colonne de direction (2) s'étend à proximité de la platine fixe (1'), et est par exemple solidaire de pièces ou d'éléments fixes par rapport à ladite platine fixe (1').

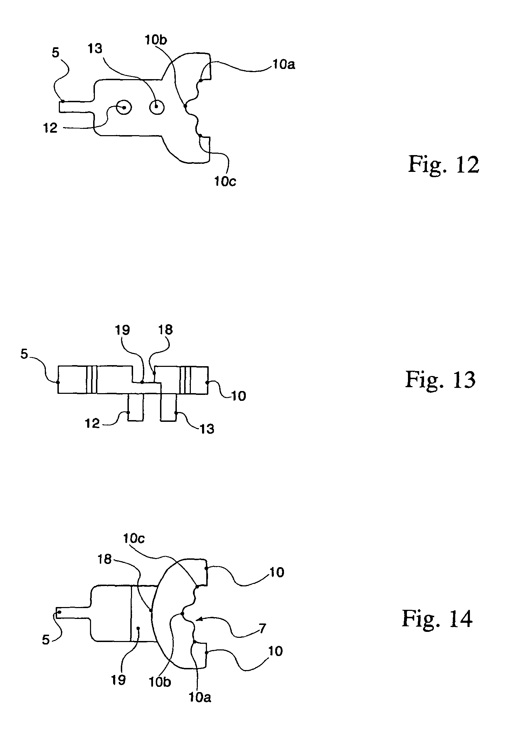

Les figures 12, 13 et 14 représentent le doigt mobile (4) conforme à l'invention respectivement en vue de dessous, de face et de dessus.

Le dispositif indicateur conforme à l'invention fonctionne de la façon suivante. En se reportant aux figures 1 et 2, le levier d'actionnement (3) est positionné dans sa position centrale et le bouton poussoir élastique (3a) est engagé dans le creux central (9b) ainsi que dans la cavité centrale (10b). Le poussoir élastique (3a) se trouve en appui simultanément contre la surface d'indexage (7) mobile et contre la surface d'indexage fixe (8). Dans cet état de fonctionnement, l'extrémité libre (5) s'étend en saillie au-delà du support fixe (1) et présente un écartement (Di) avec ledit support fixe (1). Une rotation de la colonne de direction (2) et de l'organe d'entraînement (2a) dans les deux sens n'a dans ce cas aucune incidence sur le dispositif indicateur. L'organe d'entraînement (2a) ne peut en effet pas venir au contact de l'extrémité libre (5). Le dispositif indicateur conforme à l'invention est représenté dans cet état de fonctionnement en vue de dessus à la figure 1 et en vue de dessous à la figure 2. Le creux central (9b) et la cavité centrale (10b) se superposent strictement et la différence de profondeur permet aux cavités latérales (10a, 10c) de venir en saillie des creux (9a, 9c) du support fixe (1), comme on peut le voir aux figures 1 et 2.

Lorsque l'utilisateur du véhicule souhaite par exemple tourner à gauche, le levier d'actionnement (3) est pivoté vers la gauche et le poussoir élastique (3a) se retrouve positionné dans le creux gauche (9a). Ce poussoir (3a) s'engage également dans la cavité (10a) gauche du doigt mobile (4). Compte tenu de la différence de profondeur de la cavité (10a) et du creux (9a), cet engagement provoque un déplacement du doigt mobile (4) en translation à l'encontre d'une force de rappel exercé par l'organe élastique (6), comme cela est montré dans la figure 3.

Ce déplacement du doigt mobile (4) entraîne un déplacement corrélatif de l'extrémité libre (5) d'environ 3mm. L'extrémité (5) présente désormais un écartement (Da) par rapport à l'extrémité du support fixe (1). Elle interfère dès lors avec le trajet de l'organe d'entraînement (2a).

Lorsque l'organe d'entraînement (2a) tourne dans le sens horaire L correspondant par exemple à un virage à gauche du véhicule schématisé en figure 5 en vue de dessous, l'organe d'entraînement (2a) déplace l'extrémité libre (5) en faisant pivoter le doigt mobile (4) en sens contraire.

Un tel pivotement est obtenu du fait du coulissement du plot (12) dans la seconde portion (14b) de la rainure (14), le plot (13) faisant office de pivot. Le pivotement du doigt mobile (4) n'a aucune incidence sur la position du levier d'actionnement (3), lequel reste de façon stable logé par l'intermédiaire du poussoir élastique (3a) dans le creux gauche (9a).

En revanche, lorsque la colonne de direction (2) et l'organe d'entraînement (2a) tournent dans le sens anti-horaire R, correspondant à un changement de sens de rotation de la colonne de direction (2), on se retrouve dans un état de fonctionnement schématisé à la figure 4. L'organe d'entraînement (2a) fait pivoter en sens inverse le doigt mobile (4), toujours par l'intermédiaire du plot (12) se déplaçant dans la seconde portion (14b) de la rainure (14) après que les deux plots (12, 13) aient été repoussé vers la colonne (2), mais sans aller jusqu'en butée. Le doigt mobile (4), agissant par l'intermédiaire du côté interne de la came d'appui (10), ramène le levier d'actionnement (3) dans sa position centrale (9b). Le poussoir élastique (3a) vient donc se loger dans le creux central (9b) et lorsque l'organe d'entraînement (2a) libère l'extrémité (5), le doigt mobile (4) revient se positionner dans sa position initiale grâce au ressort, lequel ramène le plot (12) dans la première portion (14a) de la rainure (14). On retrouve alors à nouveau dans l'état de fonctionnement représenté aux figures 1 et 2.

Dans l'état de fonctionnement du dispositif indicateur schématisé à la figure 6, on se retrouve dans la même situation que celle schématisée à la figure 4 avec cependant un maintien forcé du levier d'actionnement (3) dans la position correspondant à l'engagement du poussoir élastique (3a) dans le creux gauche (9a). Un tel maintien peut par exemple être lié à l'inattention du conducteur. Lorsque l'organe d'entraînement (2a) tourne dans le sens anti-horaire R, de la même manière que dans la représentation de la figure 4, le doigt mobile (4) ne peut pas ramener le levier d'actionnement (3) dans sa position centrale correspondant à l'engagement du poussoir élastique (3a) dans le creux central (9b). La rotation de l'organe d'entraînement (2a) provoque alors un déplacement supplémentaire de l'organe mobile (4), de manière que le plot (12) aille jusqu'en butée de la portion (14b) de la rainure (14) ou en direction de cette butée. Le pivotement supplémentaire de l'organe (4) déplace alors la came d'appui (10) sur le poussoir élastique (3a).

Le poussoir élastique (3a) est conçu pour absorber le déplacement supplémentaire résultant du contact avec la came (10) qui aboutit à comprimer davantage le ressort (15). Dans cette position de l'organe mobile (4), la trajectoire de l'organe d'entraînement (2a) est libérée de l'extrémité libre (5). Lorsque l'organe d'entraînement (2a) n'est plus en prise avec l'extrémité libre (5), le doigt mobile (4) est rappelé par le ressort (6) dans sa position centrale après pivotement en sens inverse du doigt (4), par déplacements en translation du plot (12) dans la rainure (14b). Le levier d'actionnement (3) étant resté immobile durant cette dernière phase, le poussoir élastique (3a) réinvestit le creux gauche (9a) comme figuré dans la représentation de la figure 3.

Le dispositif conforme à l'invention présente l'avantage non négligeable de réaliser avec des moyens extrêmement simples d'une part un mécanisme de retour automatique en position centrale du levier d'actionnement (3), et d'autre part un mécanisme de sécurité garantissant le bon fonctionnement du dispositif en cas de maintien forcé en position latérale dudit levier d'actionnement (3).

## Revendications

1. Dispositif indicateur de changement de direction pour véhicules, comportant :
- un support fixe (1), monté au voisinage d'une colonne de direction (2),
- un levier d'actionnement (3) en liaison mécanique avec le support fixe (1) et déplaçable entre des positions centrale, et latérales gauche et droite stables, les positions latérales étant des positions dans lesquelles un indicateur est activé, la position centrale étant une position dans laquelle aucun indicateur n'est activé,
- un doigt mobile (4) en liaison mécanique avec le levier d'actionnement (3) et dont les positions sur le support (1) sont déterminées par les positions du levier d'actionnement (3), l'extrémité libre (5) du doigt mobile (4) pouvant coopérer avec un organe d'entraînement (2a) tournant avec la colonne de direction (2) lorsque le levier d'actionnement (3) est dans sa position gauche ou droite de manière à le ramener dans sa position centrale,en cas de rotation de l'organe d'entraînement (2a) en sens inverse au déplacement précédent du levier d'actionnement (3),
- le doigt mobile (4) étant monté sur le support fixe (1) coulissant entre une position d'embrayage de l'extrémité libre (5) avec l'organe d'entraînement (2a) et une position débrayée,
- des moyens de sécurité garantissant l'intégrité du dispositif en cas de maintien forcé du levier d'actionnement (3) dans une position gauche ou droite lors d'une rotation en sens inverse de l'organe d'entraînement (3),
- et des moyens de rappel (6) sont prévus pour ramener le doigt mobile (4) d'une part dans sa position débrayée, et d'autre part dans une position latérale embrayée
**caractérisé en ce que**
- le doigt mobile (4) est monté pivotant sur le support fixe (1), le pivotement n'étant possible que dans la position d'embrayage pour dégager l'extrémité libre (5) du trajet de l'organe d'entraînement (2a) en fin de pivotement ;
- le doigt mobile (4) et le support fixe (1) comportent chacun une surface d'indexage (7, 8), les deux surfaces (7, 8) étant superposées de manière à coopérer avec un poussoir (3a) d'extrémité du levier d'actionnement (3) ;
- les surfaces d'indexage (7, 8) mobile et fixe comportent respectivement des cavités (10a, 10b, 10c) et des creux (9a, 9b, 9c) visant d'une part à assurer le positionnement stable du levier (3) dans les positions centrale et latérales, ces dernières conduisant à faire coulisser le doigt mobile (4) dans sa position d'embrayage, et d'autre part à assurer le retour du levier (3) en position centrale à partir d'une position latérale par rotation du doigt (4) et donc de la surface d'indexage mobile (7) lors de la rotation de la colonne de direction (2) en sens inverse de celle du levier (3) ; et
- le poussoir (3a) est élastiquement escamotable pour permettre le maintien forcé du levier (3) en position latérale malgré le changement de rotation de la colonne de direction (2).

2. Dispositif indicateur selon la revendication 2, **caractérisé en ce que** le poussoir (3a) élastique présente une course suffisante pour absorber un déplacement de cames d'appui (10) disposées aux deux extrémités de la surface d'indexage mobile (7) et venant appuyer sur le poussoir (3a) lors d'un déplacement de ladite surface d'indexage mobile (7) visant à ramener le levier (3) en position centrale alors que ce dernier est bloqué en position latérale.

3. Dispositif indicateur selon la revendication précédente, **caractérisé en ce que** le poussoir (3a) élastique est guidé dans le levier (3) selon un coulissement axial.

4. Dispositif selon la revendication précédente, **caractérisé en ce que** le poussoir élastique (3a) est un organe d'appui rigide relié à un ressort (15) intégré dans le levier d'actionnement (3).

5. Dispositif selon l'une quelconque des revendications précédentes, **caractérisé en ce que** le doigt mobile (4) présente deux plots (12, 13) s'étendant orthogonalement au plan de déplacement du doigt mobile (4) et engagés dans une rainure (14) ménagée dans le support fixe (1), une première portion (14a) de la rainure (14) servant à la translation du doigt (4) par coulissement simultané des deux plots (12, 13) et une seconde portion (14b) de la rainure (14), sensiblement orthogonale à la première portion (14a) et communiquant avec elle, servant au coulissement de l'un seulement des plots (12) à l'issue de la translation des deux plots (12, 13) dans la première portion (14a), générant ainsi un pivotement du doigt mobile (4).

6. Dispositif selon la revendication 5, **caractérisé en ce que** la rainure (14) est conformée de façon traversante dans le support fixe (1).

7. Dispositif selon la revendication 5 ou 6, **caractérisé en ce que** la rainure (14) présente une forme sensiblement en T.

8. Dispositif selon l'une quelconque des revendications précédentes, **caractérisé en ce que** la surface d'indexage fixe (8) et la surface d'indexage mobile (7) sont localisées sur un chant respectivement du support (1) et du doigt mobile (4), orienté orthogonalement au plan de leurs déplacements relatifs, lesdits chants étant superposés de manière à coopérer simultanément ou individuellement avec le poussoir élastique (3a), selon le positionnement du doigt mobile (4) et du levier d'actionnement (3) par rapport au support fixe (1).

9. Dispositif selon la revendication précédente, **caractérisé en ce que** la surface d'indexage fixe (8) se compose de trois creux juxtaposés (9a, 9b, 9c) de même profondeur pouvant loger le poussoir élastique (3a), et la surface d'indexage mobile (7) comporte trois cavités (10a, 10b, 10c) dont la cavité centrale (10b) est plus profonde que les cavités latérales (10a, 10c) et se superpose strictement au creux central (9b) de la surface d'indexage fixe (8) au repos du doigt mobile (4), positionnant les cavités latérales (10a, 10c) en saillie du support (1).

10. Dispositif selon l'une quelconque des revendications 1 à 9, **caractérisé en ce que** les moyens de rappel (6) sont un ressort comprenant une portion centrale logée dans une gorge (19) et en appui sur un épaulement (18) du doigt mobile (4), et deux portions latérales fixées au support (1) dans une position localisée en deçà de sa liaison avec le doigt mobile (4), de manière à conférer une configuration incurvée au ressort.

11. Dispositif selon l'une quelconque des revendications 1 à 10, **caractérisé en ce que** le levier d'actionnement (3) est monté pivotant sur une platine (1') solidaire d'un support fixe (1).

## Claims

1. Change of direction indicator device for vehicles including:
- a fixed support (1), mounted in the vicinity of a steering column (2),
- an actuation lever (3) mechanically connected to the fixed support (1) and displaceable between stable central and left and right lateral positions, the lateral positions being positions in which an indicator is activated, the central position being a position in which neither indicator is activated,
- a moveable finger (4) mechanically connected to the actuation lever (3) and the positions of which on the support (1) are determined by the positions of the actuation lever (3), the free end (5) of the moveable finger (4) being able to co-operate with a drive organ (2a) rotating with the steering column (2) when the actuation lever (3) is in its left or right position so as to return it to its central position in case of rotation of the drive organ (2a) in the direction opposite to the preceding displacement of the actuation lever (3), the moveable finger (4) being mounted on the fixed support (1) slidingly between a position of engagement of the free end (5) with the drive organ (2a) and a disengaged position;
- safety means guaranteeing the integrity of the device in the case of forced maintenance of the actuation lever (3) in a left or right position on rotation of the drive organ (3) in the opposite direction,
- and return means (6) provided to bring the moveable finger (4) on the one hand into its disengaged position and on the other into an engaged lateral position;
**characterised by** the fact that
- the moveable finger (4) is mounted to pivot on the fixed support (1), pivoting only being possible in the engagement position to disengage the free end (5) from the trajectory of the drive organ (2a) at the limit of pivot;
- the moveable finger (4) and the fixed support (1) each include an indexing surface (7, 8), the two surfaces (7, 8) being superimposed so as to co-operate with a push button (3a) on the end of the actuation lever (3);
- the moveable and fixed indexing surfaces (7, 8) respectively include cavities (10a, 10b, 10c) and hollows (9a, 9b, 9c) intended on the one hand to provide stable positioning of the lever (3) in the central and lateral positions, these last causing the moveable finger (4) to slide into its engagement position, and on the other to ensure the return of the lever (3) into the central position from a lateral position by rotation of the finger (4) and therefore of the moveable indexing surface (7) on rotation of the steering column (2) in the opposite direction to that of the lever (3); and
- the push button (3a) is elastically retractable to permit forced maintenance of the lever (3) in a lateral position, despite the change of rotation of the steering column (2).

2. Indicator device as described in claim 2, **characterised by** the fact that the elastic push button (3a) has sufficient travel to absorb displacement of the contact cams (10) arranged at the two ends of the moveable indexing surface (7) and bearing against the push button (3a) on displacement of the said moveable indexing surface (7) intended to return the lever (3) into the central position while it is held in a lateral position.

3. Indicator device as described in the preceding claim, **characterised by** the fact that the elastic push button (3a) is guided to slide axially in the lever (3).

4. Device as described in the preceding claim, **characterised by** the fact that the elastic push button (3a) is a rigid contact organ connected to a spring (15) integrated in the actuation lever (3).

5. Device as described in any one of the preceding claims, **characterised by** the fact that the moveable finger (4) presents two studs (12, 13) extending at right-angles to the plane of displacement of the moveable finger (4) and engaged in a groove (14) formed in the fixed support (1), a first portion (14a) of the groove (14) being used for the translation of the finger (4) by simultaneous sliding of the two studs (12, 13) and a second portion (14b) of the groove (14), substantially at right-angles to the first portion (14a) and communicating with it, used for sliding of only one of the studs (12) on completion of the translation of the two studs (12, 13) in the first portion (14a), thus causing pivoting of the moveable finger (4).

6. Device as described in claim 5, **characterised by** the fact that the groove (14) is conformed passing through the fixed support (1).

7. Device as described in claim 5 or 6, **characterised by** the fact that the groove (14) is substantially T-shaped.

8. Device as described in any one of the preceding claims, **characterised by** the fact that the fixed indexing surface (8) and the moveable indexing surface (7) are located respectively on an edge surface of the support (1) and of the moveable finger (4), orientated at right-angles to the plane of their relative displacements, the said edge surfaces being so superimposed as to co-operate simultaneously or individually with the elastic push button (3a), depending on the positioning of the moveable finger (4) and of the actuation lever (3) relative to the fixed support (1).

9. Device as described in the preceding claim, **characterised by** the fact that the fixed indexing surface (8) is composed of three juxtaposed hollows (9a, 9b, 9c) of the same depth able to accommodate the elastic push button (3a), and the moveable indexing surface (7) includes three cavities (10a, 10b, 10c) the central cavity (10b) of which is deeper than the lateral cavities (10a, 10c) and is exactly superimposed on the central hollow (9b) of the fixed indexing surface (8) when the moveable finger (4) is at rest, positioning the lateral cavities (10a, 10c) projecting from the support (1).

10. Device as described in any one of claims 1 to 9, **characterised by** the fact that the return means (6) is a spring comprising a central portion housed in a channel (19) and bearing on a shoulder (18) of the moveable finger (4), and two lateral portions fixed to the support (1) in a position located on the near side of its connection to the moveable finger (4), so as to give the spring a curved configuration.

11. Device as described in any one of claims 1 to 10, **characterised by** the fact that the actuation lever (3) is mounted to pivot on a plate (1') rigidly attached to a fixed support (1).

## Patentansprüche

1. Richtungsänderungs-Anzeigevorrichtung für Fahrzeuge, die umfasst:
- einen festen Träger (1), der in der Nähe einer Lenksäule (2) angebracht ist,
- einen Betätigungshebel (3), der mit dem festen Träger (1) mechanisch verbunden und zwischen einer stabilen Mittelposition und einer stabilen linken seitlichen und einer stabilen rechten seitlichen Position beweglich ist, wobei die seitlichen Positionen Positionen sind, in denen ein Anzeiger aktiviert ist, während die Mittelposition eine Position ist, in der kein Anzeiger aktiviert ist,
- einen beweglichen Zapfen (4), der mit dem Betätigungshebel (3) mechanisch verbunden ist und dessen Positionen an dem Träger (1) durch die Positionen des Betätigungshebels (3) bestimmt werden, wobei das freie Ende (5) des beweglichen Zapfens (4) mit einem Antriebsorgan (2a), das sich mit der Lenksäule (2) dreht, wenn der Betätigungshebel (3) in seiner linken oder rechten Position ist, zusammenwirken kann, derart, dass er in seine Mittelposition gebracht wird, falls das Antriebsorgan (2a) in einer zur vorhergehenden Verlagerung des Betätigungshebels (3) entgegengesetzten Richtung gedreht wird,
- wobei der bewegliche Zapfen (4) an dem festen Träger (1) angebracht ist und zwischen einer Position der Verriegelung des freien Endes (5) mit dem Antriebsorgan (2a) und einer entriegelten Position gleitet,
- Sicherungsmittel, die die Integrität der Vorrichtung im Fall eines erzwungenen Haltens des Betätigungshebels (3) in einer linken oder rechten Position bei einer Drehung des Antriebsorgans (3) in der entgegengesetzten Richtung gewährleisten, und
- Rückstellmittel (6), um den beweglichen Zapfen (4) einerseits in seine entriegelte Position und andererseits in eine verriegelte seitliche Position zu bringen,
**dadurch gekennzeichnet, dass**
- der bewegliche Zapfen (4) und der feste Träger (1) jeweils eine Indexierungsoberfläche (7, 8) umfassen, wobei die zwei Oberflächen (7, 8) übereinander angeordnet sind, derart, dass sie mit einem Drücker (3a) am Ende des Betätigungshebels (3) zusammenwirken;
- die bewegliche und die feste Indexierungsoberfläche (7, 8) Mulden (10a, 10b, 10c) bzw. Vertiefungen (9a, 9b, 9c) umfassen, um einerseits die stabile Positionierung des Hebels (3) in der Mittelposition und in den seitlichen Positionen zu gewährleisten, wobei diese Letzteren dazu führen, dass der bewegliche Zapfen (4) in seine Verriegelungsposition gleitet, und um andererseits die Rückkehr des Hebels (3) ausgehend von einer seitlichen Position in die Mittelposition durch Drehen des Zapfens (4) und daher der beweglichen Indexierungsoberfläche (7) bei der Drehung der Lenksäule (2) in einer zu der Richtung des Hebels (3) entgegengesetzten Richtung zu gewährleisten; und
- der Drücker (3a) elastisch versenkbar ist, um das erzwungene Halten des Hebels (3) mit Kraft in der seitlichen Position trotz der Drehungsänderung der Lenksäule (2) zu ermöglichen.

2. Anzeigevorrichtung nach Anspruch 1, **dadurch gekennzeichnet, dass** der elastische Drücker (3a) einen Hub besitzt, der ausreicht, um eine Verlagerung von Abstütznocken (10), die an den beiden Enden der beweglichen Indexierungsoberfläche (7) angeordnet sind und sich auf dem Drücker (3a) abstützen, zu absorbieren, wenn sich die bewegliche Indexierungsoberfläche (7) bewegt, um den Hebel (3) in die Mittelposition zu bringen, wenn dieser Letztere in der seitlichen Position blockiert ist.

3. Anzeigevorrichtung nach Anspruch 2, **dadurch gekennzeichnet, dass** der elastische Drücker (3a) in dem Hebel (3) axial gleitend geführt ist.

4. Vorrichtung nach dem vorhergehenden Anspruch, **dadurch gekennzeichnet, dass** der elastische Drücker (3a) ein starres Abstützorgan ist, das mit einer in den Betätigungshebel (3) integrierten Feder (15) verbunden ist.

5. Vorrichtung nach einem der vorhergehenden Ansprüche, **dadurch gekennzeichnet, dass** der bewegliche Zapfen (4) zwei Höcker (12, 13) aufweist, die sich senkrecht zur Verlagerungsebene des beweglichen Zapfens (4) erstrecken und in einer Nut (14) in Eingriff sind, die in dem festen Träger (1) ausgespart ist, wobei ein erster Abschnitt (14a) der Nut (14) der translatorischen Bewegung des Zapfens (4) durch gleichzeitiges Gleiten der zwei Höcker (12, 13) dient und ein zweiter Abschnitt (14b) der Nut (14), der zu dem ersten Abschnitt (14a) im Wesentlichen senkrecht ist und mit dieser in Verbindung steht, einem Gleiten nur eines der Höcker (12) am Ende der translatorischen Bewegung der zwei Höcker (12, 13) in dem ersten Abschnitt (14a) dient, wodurch eine Schwenkung des beweglichen Zapfens (4) hervorgerufen wird.

6. Vorrichtung nach Anspruch 5, **dadurch gekennzeichnet, dass** die Nut (14) in dem festen Träger (1) durchgehend ausgebildet ist.

7. Vorrichtung nach Anspruch 5 oder 6, **dadurch gekennzeichnet, dass** die Nut (14) im Wesentlichen die Form eines T aufweist.

8. Vorrichtung nach einem der vorhergehenden Ansprüche, **dadurch gekennzeichnet, dass** die feste Indexierungsoberfläche (8) und die bewegliche Indexierungsoberfläche (7) an einer Fase des Trägers (1) bzw. des beweglichen Zapfens (4) angeordnet sind, die senkrecht zur Ebene ihrer relativen Verlagerungen orientiert ist, wobei die Fasen übereinander angeordnet sind, derart, dass sie je nach Positionierung des beweglichen Zapfens (4) und des Betätigungshebels (3) in Bezug auf den festen Träger (3) gleichzeitig oder einzeln mit dem elastischen Drücker (3a) zusammenwirken.

9. Vorrichtung nach dem vorhergehenden Anspruch, **dadurch gekennzeichnet, dass** die feste Indexierungsoberfläche (8) aus drei nebeneinander angeordneten Vertiefungen (9a, 9b, 9c) mit gleicher Tiefe gebildet ist, die den elastischen Drücker (3a) aufnehmen können, und die bewegliche Indexierungsoberfläche (7) drei Mulden (10a, 10b, 10c) aufweist, wovon die mittlere Mulde (10b) tiefer als die seitlichen Mulden (10a, 10c) ist und der mittigen Vertiefung (9b) der festen Indexierungsoberfläche (8) in der Ruhestellung des beweglichen Zapfens (4) genau überlagert ist, wodurch die seitlichen Mulden (10a, 10c) vom Träger (1) vorstehend positioniert sind.

10. Vorrichtung nach einem der Ansprüche 1 bis 9, **dadurch gekennzeichnet, dass** die Rückstellmittel (6) eine Feder sind, die einen in einer Kehle (19) aufgenommenen Mittelabschnitt, der sich an einer Schulter (18) des beweglichen Zapfens (4) abstützt, und zwei seitliche Abschnitte, die am Träger (1) an einer Position diesseits der Verbindung mit dem beweglichen Zapfen (4) angeordnet sind, derart, dass sie der Feder eine gekrümmte Konfiguration verleihen, umfasst.

11. Vorrichtung nach einem der Ansprüche 1 bis 10, **dadurch gekennzeichnet, dass** der Betätigungshebel (3) an einer mit einem festen Träger (1) befestigten Platine (1) schwenkbar angebracht ist.
